# EUROPÄISCHE PATENTSCHRIFT

(11) **EP 3 368 583 B1**
(45) Veröffentlichungstag und Bekanntmachung des Hinweises auf die Patenterteilung: **18.12.2019**
(21) Anmeldenummer: 16785141.9
(22) Anmeldetag: 21.10.2016
(51) Int. Cl.: C08G 18/48, C08G 18/66, C08G 18/76, C08G 18/08, C08G 18/10, C08G 18/22, C09D 175/08, C08G 18/32, C08G 18/40, C08L 83/04

(54) **VERWENDUNG EINER BESCHICHTUNGSMITTELZUSAMMENSETZUNG ZUR INNENBESCHICHTUNG VON BEHÄLTERN**
USE OF A COATING COMPOSITION FOR COATING THE INTERIOR OF CONTAINERS
UTILISATION D'UNE COMPOSITION D'AGENT DE REVÊTEMENT DESTINÉ À REVÊTIR L'INTÉRIEUR DE RÉCIPIENTS

(30) Priorität: 30.10.2015 EP 15192282
(43) Veröffentlichungstag der Anmeldung: 05.09.2018
(73) Patentinhaber: Akzo Nobel Coatings International B.V., 6824 BM Arnhem (NL)
(72) Erfinder: KLAUER, Jens, 22143 Hamburg (DE); BUCK, Klaus, 27607 Geestland / Langen (DE); SEEGER, Dirk, 26125 Oldenburg (DE); PIECHA, Christoph, 26935 Stadland (DE)
(74) Vertreter: Akzo Nobel IP Department
(86) Internationale Anmeldenummer: PCT/EP2016/075326
(87) Internationale Veröffentlichungsnummer: WO 2017/072033

(56) Entgegenhaltungen:
- EP-A1- 2 695 899
- WO-A1-97/35932
- DE-A1-102010 031 682
- US-A- 5 621 043

## Beschreibung

### Gebiet der Erfindung

Die vorliegende Erfindung betrifft die Verwendung einer speziellen Beschichtungsmittelzusammensetzung zur Innenbeschichtung von Behältern, speziell Behältern zum Transport und/oder der Lagerung von Chemieprodukten wie beispielsweise Tanks, Tankwagen oder Kesselwagen. Die mit Hilfe der Beschichtungszusammensetzung hergestellten Beschichtungen auf der Innenfläche von Behältern weisen zum einen ein besonders hohe chemische Beständigkeit, zum anderen aber auch eine gute Abziehbarkeit von der beschichteten Oberfläche auf.

### Stand der Technik

In vielen Industriezweigen, beispielsweise der chemischen Großindustrie, werden vielfach Behälter zur Lagerung und/oder zum Transport verschiedenster Produkte wie beispielsweise Chemieprodukten, eingesetzt. Als solche Behälter zu nennen sind beispielsweise Tanks, Tankwagen und Kesselwagen. Die Behälter müssen selbstverständlich von Zeit zu Zeit von Innen vollständig gereinigt werden, um gegebenenfalls degradierte Produktreste, die neu eingebrachte Chargen des Produkts verschmutzen können, zu entfernen. Auch ein Wechsel der einzubringenden Produktart macht selbstverständlich eine solche Reinigung notwendig.

Die Reinigung der Innenfläche solcher Behälter ist in vielen Fällen mit viel Aufwand und Zeit verbunden. Je nach eingebrachtem Produkt und Lagerungs- oder Transportzeit in dem Behälter können sich verfestigte und gealterte Produktreste an den Behälterinnenflächen ablagern. Solche Reste können eine enorme Haftung auf besagten Innenflächen besitzen, sodass eine komplizierte händische mechanische Reinigung und/oder das Hochdruck-Wasserstrahlen der Behälter notwendig ist.

EP 2 695 899 beschreibt ein Verfahren zu Herstellung von Polyharnstoff-Elastomeren, die als Beschichtungsmittel in stark belasteten Bereichen eingesetzt werden.

### Aufgabe und Lösung

Die vorliegende Erfindung machte sich daher zur Aufgabe, den Nachteilen des Stands der Technik zu begegnen und die Innenreinigung von Behältern, insbesondere von Tanks, Tankwagen und Kesselwagen, ökonomischer und einfacher durchführbar zu gestalten.

Es wurde gefunden, dass diese Aufgabe gelöst werden konnte durch die Verwendung einer Beschichtungsmittelzusammensetzung enthaltend mindestens eine Bindemittelkomponente A und mindestens eine Härterkomponente B, wobei
die Bindemittelkomponente A
   A1 mindestens eine Polyolkomponente enthaltend mindestens ein Poly(oxyalkylen)glykol,
   A2 mindestens ein aromatisches Diamin,
   A3 Silikonelastomerpartikel und
   A4 mindestens einen Polyurethanharnstoff,
   enthält
und die Härterkomponente B
   B1 mindestens eine urethangruppenhaltige Komponente enthaltend unblockierte Isocyanatgruppen und
   B2 mindestens ein aromatisches Diisocyanat aus Methylendi(phenylisocyanat),
   enthält,
   wobei die Härterkomponente B einen Gehalt an unblockierten Isocyanatgruppen von 10 bis 30 Gew.-% aufweist
   und wobei
der Festkörper der Beschichtungsmittelzusammensetzung größer als 95 Gew.-% ist,
zur Innenbeschichtung von Behältern.

Die genannte neue Verwendung ist Gegenstand der vorliegenden Erfindung. Weiterhin Gegenstand der vorliegenden Erfindung ist ein Behälter, der auf der Innenfläche mit besagter Beschichtungsmittelzusammensetzung beschichtet ist sowie ein Verfahren zur Beschichtung der Innenfläche von Behältern mit dieser Beschichtungsmittelzusammensetzung.

Durch den Einsatz der Beschichtungsmittelzusammensetzung zur Innenbeschichtung von Behältern wird erreicht, dass in die Behälter eingebrachte Produkte, beispielsweise Chemieprodukte, nicht mit der Behälterinnenfläche selbst in Kontakt kommen. Dadurch wird verhindert, dass sich Produkte beziehungsweise Produktreste direkt auf dieser Innenfläche ablagern können, beispielsweise in Form von verfestigten und gegebenenfalls gealterten Ablagerungen, die nach dem Ablassen der Produkte zurückbleiben können und deren Entfernung von der Innenfläche sehr aufwendig sein kann. Stattdessen verbleiben solche Reste auf der Oberfläche der unter Einsatz der Beschichtungsmittelzusammensetzung hergestellten Beschichtung, wobei diese auf einfache und saubere Weise, insbesondere durch Anschneiden und anschließendes mechanisches Abziehen, von der Innenfläche des Behälters abgelöst und zusammen mit den Produktresten aus dem Behälter entfernt werden kann.

### Ausführliche Beschreibung

Die erfindungsgemäß zu verwendende Beschichtungsmittelzusammensetzungen enthalten mindestens eine Bindemittelkomponente A und eine Härterkomponente B. Trotz der gewählten Begriffe "Bindemittelkomponente A" und "Härterkomponente B", stellt der allgemeine Begriff Bindemittel im Sinne der vorliegenden Erfindung im Einklang mit der allgemeingültigen Definition den nicht-flüchtigen Anteil (= Festkörper) des Beschichtungsstoffs ohne Pigmente und Füllstoffe dar. Zu den Bindemitteln zählen daher beispielsweise auch Vernetzungsmittel, wie sie beispielsweise in der Härterkomponente B enthalten sind, und Additive wie beispielsweise Netz- und oder Dispergiermittel, Entschäumer, Verlaufadditive, Rheologieadditive oder Katalysatoren, soweit diese unter den Bedingungen zur Bestimmung des Bindemittelgehalts nicht flüchtig sind. Der Bindemittelgehalt eines Beschichtungsmittels wird mit dem Extraktionsverfahren nach Soxhlet (ISO 13944:2012; November 2012) bestimmt. Die Begriffe Bindemittelkomponente A und Härterkomponente B werden der reinen Übersichtlichkeit halber verwendet.

Der Festkörper der Beschichtungsmittelzusammensetzung wird nach ISO 3251:2008 bestimmt, indem 1 g der Beschichtungsmittelzusammensetzung für 60 min bei 105 °C getrocknet wird. Der nach Trocknung verbleibende nichtflüchtige Anteil wird zur Einwaage ins Verhältnis gesetzt und gibt den prozentualen Festkörper der Beschichtungsmittelzusammensetzung an.

Erfindungsgemäß ist der Festkörpergehalt (auch genannt Festkörper) der Beschichtungsmittelzusammensetzungen größer als 95 Gew.-%. Bevorzugt ist der Festkörpergehalt größer als 97 Gew.- %, besonders bevorzugt größer als 98 Gew.-% und ganz besonders bevorzugt größer als 99 Gew.-%.

Der Bindemittelanteil am Festkörper der erfindungsgemäßen Beschichtungsmittelzusammensetzung beträgt vorzugsweise 80 bis 98 Gew.-%, besonders bevorzugt 85 bis 95 Gew.-%. Beträgt der Bindemittelanteil am Festkörper 100 Gew.-%, so bedeutet dies, dass der Festkörper weder Pigmente noch Füllstoffe enthält.

Die Hydroxylzahl (OH-Zahl) der eingesetzten Polymere wird gemäß DIN EN ISO 4629 bestimmt.

Der Isocyanatgruppengehalt der eingesetzten Polyisocyanate wird gemäß DIN EN ISO 11909 bestimmt.

Bei der Angabe des Molekulargewichts der Polymere handelt es sich um gewichtsmittlere Molekulargewichte. Das gewichtsmittlere Molekulargewicht wird gemäß DIN 55672-1:2007-08 bestimmt.

Soweit hierin nicht anders angegeben, beziehen sich alle Norm-Angaben auf die zum Anmeldetag der vorliegenden Erfindung aktuell gültige Fassung, oder, falls zu diesem Zeitpunkt keine aktuell gültige Fassung mehr besteht, die zuletzt gültige Fassung.

Alle prozentualen Angaben und Angaben von Stoffparametern bezüglich der angegebenen Komponenten A und B und der darin enthaltenen Komponenten beziehen sich - wie üblich - auf die jeweilige Komponente ohne organischen Lösemittelanteil, sofern nicht ausdrücklich anders angegeben. Enthält beispielsweise eine erfindungsgemäße Beschichtungsmittelzusammensetzung 10 Gew.-% einer käuflichen Formulierung eines Polyetherpolyols, die das Polyetherpolyol als 50 gewichtsprozentige Lösung in einem Lösemittel enthält, so bedeutet dies, dass die erfindungsgemäße Beschichtungsmittelzusammensetzung 5 Gew.-% des Polyetherpolyols (das heißt 50 Gew.-% von 10 Gew.-%) enthält. Das über die käufliche Formulierung eingeführte Lösemittel ist somit kein prozentualer Bestandteil der Polyetherpolyols, sondern zählt zum Anteil des Lösemittels.

### Bindemittelkomponente A

Die erfindungsgemäß zu verwendenden Beschichtungsmittelzusammensetzungen enthalten mindestens eine, bevorzugt genau eine, Bindemittelkomponente A, wobei die Bindemittelkomponente A mindestens eine Polyolkomponente A1 enthaltend mindestens ein Poly(oxyalkylen)glykol, mindestens ein aromatisches Diamin A2, Silikonelastomerpartikel A3 und mindestens einen Polyurethanharnstoff A4 enthält.

### Polvolkomponente A1

Die erfindungsgemäß zu verwendenden Beschichtungsmittelzusammensetzungen enthalten in der Bindemittelkomponente A mindestens eine Polyolkomponente A1 enthaltend mindestens ein Poly(oxyalkylen)glykol. Definitionsgemäß wird eine Komponente dann als Polyolkomponente bezeichnet, wenn die in ihr enthaltenen Moleküle im Mittel mehr als eine OH-Gruppe enthalten. Bevorzugt werden Poly(oxyalkylen)glykole aus Ethylen- und/oder Propylenoxid verwendet. Bevorzugt enthält die Polyolkomponente A1 mindestens ein Poly(oxyalkylen)glykol aus Ethylen- und/oder Propylenoxid.

In einer besonders bevorzugten Ausführungsform enthält die Polyolkomponente A1 mindestens ein propoxyliertes Polyethylenglykol A1.1, mindestens ein Polypropylenglykol A1.2 sowie mindestens ein propoxyliertes Trimethylolpropan A1.3. In dieser besonders bevorzugten Ausführungsform weist das propoxylierte Polyethylenglykol A1.1 ein gewichtsmittleres Molekulargewicht M_{w} zwischen 6000 und 7000 g/mol auf und die OH-Zahl des Polypropylenglykols A1.2 liegt zwischen 25 und 35 mg KOH/g.

Die Polyolkomponente A1 ist in den erfindungsgemäß zu verwendenden Beschichtungsmittelzusammensetzungen vorzugsweise in einer Menge von 8 bis 76 Gew.-%, besonders bevorzugt in einer Menge von 20 bis 70 Gew.-%, bezogen auf das Gesamtgewicht der Beschichtungsmittelzusammensetzung enthalten.

### Aromatisches Diamin A2

Die erfindungsgemäß zu verwendenden Beschichtungsmittelzusammensetzungen enthalten in der Bindemittelkomponente A mindestens ein aromatisches Diamin A2.

Vorzugsweise handelt es sich beim aromatischen Diamin A2 um einen einkernigen Aromaten. Vorzugsweise sind die beiden Amingruppen des aromatischen Diamins A2 jeweils direkt an den Aromaten gebunden. Vorzugsweise tragen ein, zwei, drei, oder vier der verbleibenden Substitutionspositionen des einkernigen Aromaten, besonders bevorzugt genau drei der verbleibenden Substitutionspositionen, Alkylreste. In einer besonders bevorzugten Ausführungsform handelt es sich bei den Alkylresten um Methylreste und/oder Ethylreste und in einer ganz besonders bevorzugten Ausführungsform ist das aromatische Diamin A2 3,5-Diethyltoluol-2,4-diamin und/oder 3,5-Diethyltoluol-2,6-Diamin. Geeignete aromatische Diamine A2 werden beispielsweise von der Firma Aldrich angeboten.

Das aromatische Diamin A2 ist in den erfindungsgemäß zu verwendenden Beschichtungsmittelzusammensetzungen vorzugsweise in einer Menge von 1 bis 8 Gew.-%, besonders bevorzugt in einer Menge von 3 bis 5 Gew.-%, bezogen auf das Gesamtgewicht der Beschichtungsmittelzusammensetzung enthalten.

Das mindestens eine aromatische Diamin A2 wird in den erfindungsgemäßen Beschichtungsmittelzusammensetzungen als Quervernetzer eingesetzt. Eine Verringerung des gewichtsprozentualen Anteils des aromatischen Diamins A2 am Gesamtgewicht der Beschichtungsmittelzusammensetzung führt zu einer Beeinträchtigung der Weiterreißfestigkeit der resultierenden Beschichtung. Eine Erhöhung des gewichtsprozentualen Anteils des aromatischen Diamins A2 am Gesamtgewicht der Beschichtungsmittelzusammensetzung führt zu einer verringerten chemischen Beständigkeit der resultierenden Beschichtung sowie einer verschlechterten Verarbeitbarkeit der Beschichtungsmittelzusammensetzung.

### Silikonelastomerpartikel A3

Desweiteren enthalten die erfindungsgemäß zu verwendenden Beschichtungsmittelzusammensetzungen in der Bindemittelkomponente A Silikonelastomerpartikel A3. Im Rahmen dieser Erfindung werden die Silikonelastomerpartikel zu den Bindemitteln gezählt. Bei den erfindungsgemäß einzusetzenden Silikonelastomerpartikeln A3 handelt es sich vorzugsweise um Kern-Schale-Partikel. Gemäß der IUPAC-Definition enthalten Kern-Schale-Partikel mindestens zwei Phasen. Kern-Schale-Systeme setzen sich zusammen aus einem inneren Teil, dem sogenannten Kern, und einem äußeren Teil, der sogenannten Schale.

Die Silikonelastomerpartikel A3 besitzen vorzugsweise einen Kern enthaltend vernetztes Polysiloxan und eine Schale, die reaktive Gruppen aufweist. Der Kern ist vorzugsweise ein vernetztes Polyorganosiloxan, welches Dialkylsiloxan-Wiederholungseinheiten aufweist, wobei der Ausdruck Alkyl einen C₁ bis C₁₈-Rest bedeutet. Bevorzugt enthält der Kern Dimethylsiloxan-Wiederholungseinheiten. Die reaktiven Gruppen der Schale enthalten bevorzugt Epoxidgruppen, ethylenisch ungesättigte Gruppen und/oder Hydroxylgruppen. Besonders bevorzugt enthalten die reaktiven Gruppen der Schale Hydroxylgruppen.

Die Silikonelastomerpartikel A3 sind in den erfindungsgemäß zu verwendenden Beschichtungsmittelzusammensetzungen vorzugsweise in einer Menge von 0,2 bis 9 Gew.-%, besonders bevorzugt in einer Menge von 3 bis 7 Gew.-%, bezogen auf das Gesamtgewicht der Beschichtungsmittelzusammensetzung enthalten.

Eine Verringerung des gewichtsprozentualen Anteils der Silikonelastomerpartikel A3 am Gesamtgewicht der Beschichtungsmittelzusammensetzung führt zu einer verschlechterten chemischen Beständigkeit der resultierenden Beschichtungen.

Die Silikonelastomerpartikel A3 haben vorzugsweise eine Volumenpartikelgröße mit einem D₅₀-Wert im Bereich von 0,05 bis 5 µm, bevorzugt von 0,1 bis 3 µm. Die Teilchengröße von Silikonelastomerpartikeln kann im Allgemeinen durch statische Lichtstreuung (Laserbeugung) nach ISO 13320:2009-10 bestimmt werden.

Besonders bevorzugt sind die Silikonelastomerpartikel A3 in einer Polyolkomponente A1 oder einem Teil dieser Polyolkomponente A1 dispergiert. Dabei ist es ganz besonders bevorzugt, wenn als Dispergiermedium propoxyliertes Trimethylolpropan A1.3 verwendet wird. Bei dieser ganz besonders bevorzugten Ausführungsform enthält die Dispersion zwischen 20 und 60 Gew.-%, vorzugsweise zwischen 35 und 45 Gew.-%, dispergierte Silikonelastomerpartikel bezogen auf das Gesamtgewicht der Dispersion.

Geeignete kommerziell erhältliche Produkte dieser besonders bevorzugten Ausführungsform sind von der Firma Evonik unter der Produktlinie Albidur® erhältlich.

### Polyurethanharnstoff A4

Als weiteren Bestandteil enthalten die erfindungsgemäß zu verwendenden Beschichtungsmittelzusammensetzungen in der Bindemittelkomponente A mindestens einen Polyurethanharnstoff A4.

Der Polyurethanharnstoff A4 ist in den erfindungsgemäß zu verwendenden Beschichtungsmittelzusammensetzungen vorzugsweise in einer Menge von 0,5 bis 11 Gew.-%, besonders bevorzugt in einer Menge von 3 bis 8 Gew.-%, bezogen auf das Gesamtgewicht der Beschichtungsmittelzusammensetzung enthalten.

Der Einsatz eines Polyurethanharnstoffs A4 ist in den erfindungsgemäß zu verwendenden Beschichtungsmittelzusammensetzungen für die chemische Widerstandsfähigkeit der resultierenden Beschichtung unerlässlich. Eine Verringerung des gewichtsprozentualen Gehaltes an Polyurethanharnstoff in der Beschichtungsmittelzusammensetzung führt zu einer verringerten chemischen Widerstandsfähigkeit der erfindungsgemäß hergestellten Beschichtung, wodurch es zur Ablösung der Beschichtungen vom Substrat kommen kann.

In einer ganz besonders bevorzugten Ausführungsform kommen Formulierungen zum Einsatz, bei denen der Polyurethanharnstoff A4 in einer Polyolkomponente A1 oder einem Teil dieser Polyolkomponente A1 vorliegt. Dabei ist es ganz besonders bevorzugt, wenn der Polyurethanharnstoff A4 im Polypropylenglykol A1.2 vorliegt. Bei dieser ganz besonders bevorzugten Ausführungsform enthält die Mischung aus Polypropylenglykol A1.2 und Polyurethanharnstoff A4 zwischen 20 und 40 Gew.-%, vorzugsweise zwischen 18 und 22 Gew.-%, Polyurethanharnstoff A4, bezogen auf das Gesamtgewicht dieser Formulierung.

Geeignete kommerziell erhältliche Produkte dieser ganz besonders bevorzugten Ausführungsform von A4 sind unter der Produktlinie Desmophen® der Firma Bayer Material Science erhältlich.

### Härterkomponente B

Die erfindungsgemäß zu verwendenden Beschichtungsmittelzusammensetzungen enthalten mindestens eine Härterkomponente B, wobei die Härterkomponente B mindestens eine urethangruppenhaltige Komponente enthaltend unblockierte Isocyanatgruppen B1 sowie mindestens ein aromatisches Diisocyanat aus Methylendi(phenylisocyanat) B2 aufweist. Erfindungsgemäß weist die Härterkomponente B einen Gehalt an unblockierten Isocyanatgruppen von 10 bis 30 Gew.-%, bevorzugt von 15 bis 30 Gew.-%, auf.

Die Härterkomponente B ist in den erfindungsgemäß zu verwendenden Beschichtungsmittelzusammensetzungen vorzugsweise in einer Menge von 20 bis 40 Gew.-%, besonders bevorzugt in einer Menge von 24 bis 32 Gew.-%, bezogen auf das Gesamtgewicht der Beschichtungsmittelzusammensetzung enthalten.

Die urethangruppenhaltige Komponente B1 der Härtermischung B wird vorzugsweise hergestellt durch Reaktion einer hydroxylgruppenhaltigen Komponente B1.1 mit einer Isocyanatkomponente B1.2. Vorzugsweise handelt es sich bei der hydroxylgruppenhaltigen Komponente B1.1 um mindestens ein C₁- C₆-alkoxyliertes Poly(oxyalkylen)glykol. Bevorzugt werden alkoxylierte Poly(oxyalkylen)glykole aus Ethylen- und/oder Propylenoxid eingesetzt. Besonders bevorzugt ist die Komponente B1.1 ein ethoxyliertes Polypropylenglykol. Geeignete kommerziell erhältliche Produkte sind von der Firma Bayer Material Science unter der Produktlinie Desmophen® erhältlich.

Vorzugsweise ist die Isocyanatkomponente B1.2 zur Herstellung der urethangruppenhaltigen Verbindung B1 ein aromatisches Diisocyanat, vorzugsweise ein aromatisches Diisocyanat aus Methylendi(phenylisocyanat).

Bei der Herstellung der urethangruppenhaltigen Verbindung B1 enthaltend freie Isocyanatgruppen wird das Verhältnis der OH-Gruppen der Komponente B1.1 zu den NCO-Gruppen der Komponente B1.2 vorzugsweise so gewählt, dass für das Verhältnis OH:NCO gilt OH < NCO. Vorzugsweise liegt dabei das Verhältnis von OH:NCO in einem Bereich von 1:1,05 bis 1:2,05. Besonders bevorzugt ist das Verhältnis von OH:NCO 1:2. Der Überschuss an NCO-Gruppen im Verhältnis zu den OH-Gruppen führt dazu, dass die urethangruppenhaltige Komponente B1 unblockierte NCO-Gruppen trägt, die für die späteren Vernetzungsreaktionen mit der Bindemittelkomponente A zur Verfügung stehen. Es ist besonders bevorzugt wenn alle OH-Gruppen der Komponente B1.1 mit den Isocyanatgruppen der Komponente B1.2 unter Ausbildung von Urethangruppen reagiert haben, so dass die urethangruppenhaltige Komponente B1 keine OH-Gruppen aufweist.

Die urethangruppenhaltige Verbindung B1 weist vorzugsweise ein gewichtsmittleres Molekulargewicht M_{w} von 4000 bis 6000 g/mol, besonders bevorzugt von 2000 bis 3000 g/mol auf.

Ganz besonders bevorzugt wird zur Herstellung der urethangruppenhaltigen Komponente B1 als Isocyanatkomponente B1.2 das aromatische Diisocyanat aus Methylendi(phenylisocyanat) B2 verwendet, welches erfindungsgemäß in der Härterkomponente B enthalten ist.

Erfindungsgemäß enthält die Härterkomponente B neben der Komponente B1 mindestens ein aromatisches Diisocyanat aus Methylendi(phenylisocyanat) B2. Vorzugsweise ist das aromatische Diisocyanat B2 2,2'-Diphenylmethan-diisocyanat oder 2,4'-Diphenylmethandiisocyanat oder eine Kombination daraus.

Vorzugsweise enthält die Härterkomponente B 30 bis 80 Gew-%, besonders bevorzugt 40 bis 70 Gew.-%, des aromatischen Diisocyanat aus Methylendi(phenylisocyanat) B2.

Die Härterkomponente B kann hergestellt werden, in dem zunächst die urethangruppenhaltige Komponente B1 synthetisiert wird. Im nächsten Schritt wird das aromatische Diisocyanat aus Methylendi(phenylisocyanat) B2 der Komponente B1 beigemischt, um somit die Härterkomponente B herzustellen.

In der ganz besonders bevorzugten Ausführungsform, in der die Komponente B1.2 identisch mit der Komponente B2 ist, erfolgt die Herstellung der Härterkomponente B durch direktes Vermischen der hydroxylgruppenhaltigen Verbindung B1.1 mit dem aromatischen Diisocyanat aus Methylendi(phenylisocyanat) B2. Beim Vermischen der Komponenten kommt es zur Reaktion der OH-Gruppen mit den NCO-Gruppen unter Ausbildung der urethangruppenhaltigen Komponente B1 enthaltend unblockierte Isocyanatgruppen. In dieser ganz besonders bevorzugten Ausführungsform liegt das anfängliche Verhältnis der OH-Gruppen der Komponente B1.1 zu den NCO-Gruppen der Komponente B2 in einem Bereich von 0,5:4 bis 1,5:4, vorzugsweise 0,8:4 bis 1,2:4.

Bezogen auf die erfindungsgemäß zu verwendende Beschichtungsmittelzusammensetzungen ist es weiterhin bevorzugt, dass das Verhältnis der Hydroxylgruppen aller Komponenten der Bindemittelkomponente A zu den Isocyanatgruppen der Härterkomponente B OH:NCO in einem Bereich von 1:0,9 bis 1:1,4 liegt, besonders bevorzugt liegt das Verhältnis bei 1:1,1.

Übersteigt der Überschuss an Isocyanatgruppen allerdings das zuvor beschriebene Verhältnis, nimmt die Entfernbarkeit der resultierenden Beschichtung durch Zunahme der Haftung am Substrat ab.

### Weitere Bestandteile der Beschichtungsmittelzusammensetzung

### Pigmente und Füllstoffe

Pigmente sind gemäß DIN EN ISO 4618 Farbmittel, die aus feinen Teilchen bestehen, die in der flüssigen Phase des Beschichtungsstoffes unlöslich sind und aufgrund ihrer optischen, schützenden und/oder dekorativen Eigenschaften verwendet werden. Der Begriff Farbmittel schließt hierbei schwarze oder weiße Farbmittel ein. Bevorzugte Pigmente sind farbgebende Pigmente und/oder effektgebende Pigmente und Korrosionsschutzpigmente. Unter effektgebenden Pigmenten sind solche zu verstehen, die einen optischen Effekt geben, der insbesondere auf Lichtreflexion beruht. Typische effektgebende Pigmente im Sinne dieser Anmeldung sind Pigmente mit eine hohen chemischen und thermischen Beständigkeit.

Füllstoffe hingegen sind nach DIN EN ISO 4618 Materialien in körniger oder Pulverform, die in der flüssigen Phase eines Beschichtungsstoffs unlöslich sind und verwendet werden, um bestimmte physikalische Eigenschaften zu erreichen oder zu beeinflussen. Da es zwischen Pigmenten und Füllstoffen hinsichtlich ihres Verwendungszwecks zu Überschneidungen kommen kann, wird häufig der Brechungsindex zu deren Unterscheidung herangezogen. Dieser liegt bei Füllstoffen unterhalb von 1,7, weshalb diese Produktklasse kein nennenswertes Streu- und Deckvermögen erreicht. Eine Unterscheidung ist im Rahmen der vorliegenden Erfindung jedoch nicht zwingend notwendig.

Vorzugsweise werden in den erfindungsgemäß zu verwendenden Beschichtungsmittelzusammensetzungen Pigmente eingesetzt, um die Bindemittelkomponente A und die Härterkomponente B einzufärben und damit bei der Applikation eine optische Mischungskontrolle zu haben. Bei der Auswahl der Pigmente wird vorzugsweise ihre chemische Beständigkeit gegenüber allgemeinen Chemieprodukten berücksichtigt.

Bevorzugte Pigmente basieren auf einer (Mono-)Azo-Gruppierung (-N=N-) und weisen vorzugsweise einen gelben Farbton auf. Beispielsweise kann hierzu das Pigment C.I. Pigment Yellow 74 verwendet werden. Besonders bevorzugte Pigmente weisen einen schwarzen Farbton auf und basieren auf organischen Ruß. Beispielsweise kann hierzu das Pigment C.I. Pigment Black 7 verwendet werden. Weitere typische und in der erfindungsgemäß zu verwendenden Beschichtungsmittelzusammensetzung einsetzbare Pigmente sind Weißpigmente wie beispielsweise Titandioxid in der Rutil- Form oder auf Kupfer-Phthalocyaninbasierende Blaupigmente.

Vorzugsweise wird als Füllstoff alkaliarmes Borsilikatglas in Form von Mikrohohlkugeln eingesetzt. Der vorzugsweise Einsatz von Mikrohohlkugeln in den erfindungsgemäß zu verwendenden Beschichtungszusammensetzungen trägt zur Verbesserung der Sichtbarkeit von Klingenanschnitten bei. Des Weiteren können Talkum, Glimmer, Bariumsulfat, Silikat-basierte Komponenten sowie quartärer Alkyl-Ammoniumton als Füllstoffe in der erfindungsgemäß zu verwendenden Beschichtungsmittelzusammensetzung eingesetzt werden.

### Weitere Bestandteile

Die erfindungsgemäß zu verwendenden Beschichtungsmittelzusammensetzungen können zusätzlich zu den bereits vorhandenen Bindemitteln weitere Bindemittel enthalten. Diese Bindemittel umfassen beispielsweise typische Lackadditive wie Entlüftungsmittel aus Polysiloxanen, Haftvermittler aus Glycidoxypropyltrimethoxysilanen, rheologische Additive wie Thixotropierungsmittel und Katalysatoren aus Amin-, Zinn-, Diazabicyclooctan- und/oder Zink-, Zirkon- und Aluminiumverbindungen. Die erfindungsgemäß zu verwendenden Beschichtungsmittelzusammensetzungen können auch zu den Füllstoffen zählende Molekularsiebe aus Zeolithen enthalten.

Besonders bevorzugt enthalten die erfindungsgemäß zu verwendenden Beschichtungsmittelzusammensetzungen Katalysatoren aus Zirkon, Zinn- und/oder Zinkkomplexen und/oder Bismutsalzen und/oder Aluminiumverbindungen, welche in der Lage sind die Reaktion zwischen Hydroxyl- und Isocyanatgruppen zu katalysieren.

In einer weiteren besonders bevorzugten Ausführungsform enthalten die erfindungsgemäß zu verwendenden Beschichtungsmittelzusammensetzungen, bezogen auf die Gesamtmasse der Beschichtungsmittelzusammensetzung, 0,05 bis 0,15 Gew.-%, vorzugsweise 0,08 bis 0,10 Gew.-%, Entlüftungsmittel, 0,10 bis 1,00 Gew.-%, vorzugsweise 0,20 bis 0,50 Gew.-%, Haftvermittler, 0,01 bis 0,40 Gew.-%, vorzugsweise 0,04 bis 0,23 Gew.-%, rheologische Additive, 0,01 bis 5,00 Gew.-%, vorzugsweise 1,50 bis 2,50 Gew.-% Molekularsiebe und 0,10 bis 1,00 Gew.-%, vorzugsweise 0,35 bis 0,45%, Katalysatoren.

### Erfindungsgemäße Verwendung und erfindungsgemäße Verfahren

Erfindungsgemäß wird die oben beschriebene Beschichtungsmittelzusammensetzung zur Innenbeschichtung von Behältern verwendet. Demzufolge ist auch ein Verfahren zur Beschichtung der Innenfläche von Behältern mit der Beschichtungsmittelzusammensetzung sowie ein entsprechend auf der Innenfläche beschichteter Behälter Gegenstand der vorliegenden Erfindung.

Als Behälter gilt im Rahmen der vorliegenden Erfindung der allgemeingültigen Definition folgend ein Gegenstand, der in seinem Inneren einen Hohlraum aufweist und dem Zweck dient, ein in diesen Hohlraum eingelagertes Produkt von seiner Umwelt zu trennen. Die Wandung des Behälters ist vorzugsweise so ausgestaltet, dass in dem Behälter auch Flüssigkeiten eingelagert werden können. Die Wandung ist also vorzugsweise geschlossen ausgestaltet. Ebenfalls bevorzugt handelt es sich um eine starre und steife Wandung. Ein Kontakt zur Umwelt, insbesondere um das Ein- und Ablassen von eingelagerten Produkten oder die Reinigung zu ermöglichen, kann durch verschließbare Türen, Ventile und Leitungen geschaffen werden. Entsprechende Behälter können auch unter Druck stehen beziehungsweise so ausgestaltet sein, dass sie mit gegenüber Normaldruck erhöhten Druck beaufschlagbar sind.

Bevorzugt handelt es sich bei der zu beschichtenden Innenfläche des Behälters um ein metallisches Substrat.

Bevorzugt einzusetzende Behälter sind beispielsweise Tanks, Tankwagen und Kesselwagen.

Bei der erfindungsgemäßen Verwendung wird die Beschichtungsmittelzusammensetzung bevorzugt direkt auf das metallische Substrat aufgebracht.

Zur Herstellung einer Beschichtung auf der Innenfläche eines Behälters wird die erfindungsgemäße Beschichtungsmittelzusammensetzung auf die bevorzugt metallische Innenfläche des Behälters appliziert, beispielsweise durch Spritzapplikation. Typische Nassschichtdicken liegen von 100 bis 600 µm, bevorzugt 150 bis 450 µm.

Die Applikation der Beschichtungsmittelzusammensetzung erfolgt vorzugsweise über eine 2-Komponenten Anlage, bei der die Bindemittelkomponente A und die Härterkomponente B getrennt der Applikationseinheit zugeführt werden. Eine Vermischung der beiden Komponenten A und B erfolgt vorzugsweise erst in der Applikationseinheit. Beispielsweise kann hierzu eine Airless Spritzpistole mit integrierter Statikmischereinheit verwendet werden. Vorzugsweise erfolgt eine Applikation der erfindungsgemäßen Beschichtungsmittelzusammensetzung bei Temperaturen zwischen 20 und 80 °C. Applikationstemperaturen oberhalb der Umgebungstemperatur werden durch Heizen der Applikationseinheit und gegebenenfalls durch Heizen der Aufbewahrungsbehälter realisiert.

Nach der Applikation der erfindungsgemäß zu verwendenden Beschichtungsmittelzusammensetzung auf ein Substrat, das heißt die bevorzugt metallische Innenfläche eines Behälters, erfolgt die Härtung, das heißt insbesondere chemische Vernetzung der Bindemittelmittelkomponente A mit der Härterkomponente B. Die chemische Vernetzung wird bei Temperaturen von 15 bis 60 °C, vorzugsweise bei 15 bis 25 °C, durchgeführt.

Aufgrund des hohen Festkörpergehaltes der erfindungsgemäßen Beschichtungsmittelzusammensetzungen ist der Volumenschrumpf beim Aushärten der Beschichtungsmittelzusammensetzung als vernachlässigbar anzusehen. Der Volumenschrumpf liegt im Fehlerbereich der Bestimmung der entsprechenden Schichtdicken. Schichtdickenbestimmungen der gehärteten Beschichtungsmittelzusammensetzung werden mittels eines modularen Schichtdicken-Mess-Systems von Qnix®8500 durchgeführt.

Es hat sich gezeigt, dass sich die so hergestellten und auf der Innenfläche beschichteten Behälter nach bestimmungsgemäßem Gebrauch, beispielsweise nach Lagerung und/oder Transport von Produkten wie flüssigen Chemieprodukten, auf stark vereinfachte Weise reinigen lassen. Denn die wie oben beschrieben hergestellte Beschichtung kann durch einfaches Abziehen, gegebenenfalls in Kombination mit einem vorher stattfindenden Anschneiden der Beschichtung, von der Innenfläche des Behälters rückstandsfrei entfernt werden. Der Begriff Abziehen beschreibt in diesem Zusammenhang das rückstandslose Entfernen einer Beschichtung von einem Substrat durch Einwirken einer mechanischen Zugkraft. Bei dieser rückstandslosen Entfernung werden dann selbstverständlich auch Produktreste, die auf der Beschichtung angeordnet sind, entfernt. Gegebenenfalls kann nach der kompletten Entfernung der Beschichtung der Behälter noch mit Wasser ausgespült werden, um letzte Reste, die dann aber lose im Behälterraum aufliegen und insbesondere nicht stark haftend auf der Innenfläche angeordnet sind, zu entfernen.

Demzufolge ist auch ein Verfahren zur Reinigung eines Behälters, welches die folgenden Schritte umfasst, Gegenstand der vorliegenden Erfindung:
(A) Bereitstellen eines mit Produktresten mindestens eines Produktes verschmutzten Behälters, welcher eine erfindungsgemäße Innenbeschichtung aufweist, welche vor dem Befüllen des Behälters mit einem Produkt hergestellt wurde, wobei der Behälter zur Lagerung und/oder dem Transport von mindestens einem Produkt verwendet wurde,
   und
(B) Rückstandsfreie Entfernung der Innenbeschichtung sowie den auf der Innenbeschichtung angeordneten Produktresten.

Die rückstandfreie Entfernung der Innenbeschichtung und der darauf angeordneten Produktreste erfolgt, wie bereits weiter oben angegeben, bevorzugt durch Anschneiden der Beschichtung und dann folgendes mechanisches Abziehen der Beschichtung.

Die Vorteile der erfindungsgemäßen Verwendung und Verfahren kommen insbesondere im Falle von zu lagernden und/oder zu transportierenden Produkten zum Ausdruck, die flüssig sind und die selbst beziehungsweise deren gegebenenfalls degradierte Produktreste fest haftend sowie schwierig von Oberflächen ablösbar sind. Unter flüssigen Produkten sind solche zu verstehen, die bei Normaldruck und einer Temperatur von 20°C fließfähig sind, also beispielsweise dünnflüssig oder zähflüssig beziehungsweise hochviskos sind. Demzufolge handelt es sich im Rahmen der vorliegenden Erfindung bei den Produkten bevorzugt um flüssige Industrieprodukte wie insbesondere chemische Industrieprodukte. Genannt seien Farben, Lacke, Schmierstoffe, Klebstoffe, Leime oder Öle wie Rohöl, Mineralöle oder Silkonöle.

### Beispiele

Im Folgenden soll die Erfindung durch Beispiele näher erläutert werden.

Sofern nicht anders ausgeführt, handelt es sich bei Angaben in Teilen um Gewichtsteile und bei Angaben in Prozenten um Gewichtsprozente.

### Herstellung erfindungsgemäß zu verwendender Ausführungsformen BM1 bis BM9 der Bindemittelkomponente A:

**Tabelle 1: Zusammensetzung der Ausführungsformen BM1 bis BM3**

| Bindemittelkomponente **A** | | | |
|---|---|---|---|
| | **BM1** | **BM2** | **BM3** |
| **Vorlage** | | | |
| Propoxyliertes Polyethylenglykol **A1.1** | 13,75 | 13,75 | 13,75 |
| Formulierung aus Propylenglykol **A1.2** enthaltend 20 Gew.-% Polyurethanharnstoff **A4** bezogen auf die Formulierung | 11,00 | 11,00 | 11,00 |
| 40-Gew.-% Silikonelastomerdispersion enthaltend 40 Gew.-% Silikonelastomerpartikel **A3** in propoxyliertem Trimethylolpropan **A1.3** | 10,00 | 20,00 | 10,00 |
| Modifiziertes Polyamid Verdickungsmittel | 0,10 | 0,10 | 0,10 |
| Organomodifiziertes mineralisches Verdickungsmittel | 0,35 | 0,35 | 0,35 |
| Füllstoff enthaltend Chlorit, Glimmer und Quarz | 5,50 | 5,50 | 5,50 |
| Molekularsieb als Feuchtigkeitsfänger | 4,00 | 4,00 | 4,00 |
| | | | |
| Propoxyliertes Polyethylenglykol **A1.1** | 20,00 | 10,00 | 16,00 |
| Organischer Katalysator | 0,28 | 0,28 | 0,28 |
| Beschleuniger 2 enthaltend Diazabicyclooctan und Tris(Dimethylaminopropylamin) | 0,24 | 0,24 | 0,24 |
| Metallkomplex Katalysator auf Basis von Zink | 0,28 | 0,28 | 0,28 |
| Aromatisches Diamin **A2** | 6,00 | 6,00 | 10,00 |
| Silikonhaltiger Entschäumer | 0,10 | 0,10 | 0,10 |
| | | | |
| Formulierung aus Propylenglykol **A1.2** enthaltend 20 Gew.-% Polyurethanharnstoff **A4** bezogen auf die Formulierung | 26,00 | 26,00 | 26,00 |
| | | | |
| gamma-Glycidoxy-propyltrimethoxysilan | 0,40 | 0,40 | 0,40 |
| Mikrohohlkugeln | 2,00 | 2,00 | 2,00 |
| | | | |
| Gesamt Bindemittelkomponente **A** | 100,00 | 100,00 | 100,00 |

**Tabelle 2: Zusammensetzungen der Ausführungsformen BM4 bis BM6**

| Bindemittelkomponente **A** | | | |
|---|---|---|---|
| | **BM4** | **BM5** | **BM6** |
| **Vorlage** | | | |
| Propoxyliertes Polyethylenglykol **A1.1** | 13,75 | 13,75 | 13,75 |
| Formulierung aus Propylenglykol **A1.2** enthaltend 20 Gew.-% Polyurethanharnstoff **A4** bezogen auf die Formulierung | 21,00 | 11,00 | 11,00 |
| 40-Gew.-% Silikonelastomerdispersion enthaltend 40 Gew.-% Silikonelastomerpartikel **A3** in propoxyliertem Trimethylolpropan **A1.3** | 10,00 | 20,00 | 10,00 |
| Modifiziertes Polyamid Verdickungsmittel | 0,10 | 0,10 | 0,10 |
| Organomodifiziertes mineralisches Verdickungsmittel | 0,35 | 0,35 | 0,35 |
| Füllstoff enthaltend Chlorit, Glimmer und Quarz | 5,50 | 5,50 | 5,50 |
| Molekularsieb als Feuchtigkeitsfänger | 4,00 | 4,00 | 4,00 |
| | | | |
| Propoxyliertes Polyethylenglykol **A1.1** | 10,00 | 10,00 | 19,40 |
| Organischer Katalysator | 0,28 | 0,28 | 0,28 |
| Beschleuniger 2 enthaltend Diazabicyclooctan und Tris(Dimethylaminopropylamin) | 0,24 | 0,24 | 0,24 |
| Metallkomplex Katalysator auf Basis von Zink | 0,28 | 0,28 | 0,28 |
| Aromatisches Diamin **A2** | 6,00 | 6,00 | 10,00 |
| Silikonhaltiger Entschäumer | 0,10 | 0,10 | 0,10 |
| | | | |
| Formulierung aus Propylenglykol **A1.2** enthaltend 20 Gew.-% Polyurethanharnstoff **A4** bezogen auf die Formulierung | 26,00 | 26,00 | 26,00 |
| | | | |
| gamma-Glycidoxy-propyltrimethoxysilan | 0,40 | 0,40 | 1,00 |
| Mikrohohlkugeln | 2,00 | 2,00 | 2,00 |
| | | | |
| Gesamt Bindemittelkomponente **A** | 100,00 | 100,00 | 100,00 |

**Tabelle 3: Zusammensetzung der Ausführungsformen BM7 bis BM9**

| Bindemittelkomponente **A** | | | |
|---|---|---|---|
| | **BM7** | **BM8** | **BM9** |
| **Vorlage** | | | |
| Propoxyliertes Polyethylenglykol **A1.1** | 13,75 | 13,75 | 13,75 |
| Formulierung aus Propylenglykol **A1.2** enthaltend 20 Gew.-% Polyurethanharnstoff **A4** bezogen auf die Formulierung | 11,00 | 11,00 | 11,00 |
| 40-Gew.-% Silikonelastomerdispersion enthaltend 40 Gew.-% Silikonelastomerpartikel **A3** in propoxyliertem Trimethylolpropan **A1.3** | 10,00 | 20,00 | 10,00 |
| Modifiziertes Polyamid Verdickungsmittel | 0,10 | 0,10 | 0,10 |
| Organomodifiziertes mineralisches Verdickungsmittel | 0,35 | 0,35 | 0,35 |
| Füllstoff enthaltend Chlorit, Glimmer und Quarz | 5,50 | 5,50 | 5,50 |
| Molekularsieb als Feuchtigkeitsfänger | 4,00 | 4,00 | 4,00 |
| | | | |
| Propoxyliertes Polyethylenglykol **A1.1** | 22,00 | 22,00 | 22,00 |
| Organischer Katalysator | 0,28 | 0,28 | 0,28 |
| Beschleuniger 2 enthaltend Diazabicyclooctan und Tris(Dimethylaminopropylamin) | 0,24 | 0,24 | 0,24 |
| Metallkomplex Katalysator auf Basis von Zink | 0,28 | 0,28 | 0,28 |
| Aromatisches Diamin **A2** | 6,00 | 6,00 | 10,00 |
| Silikonhaltiger Entschäumer | 0,10 | 0,10 | 0,10 |
| | | | |
| Formulierung aus Propylenglykol **A1.2** enthaltend 20 Gew.-% Polyurethanharnstoff **A4** bezogen auf die Formulierung | 26,00 | 26,00 | 26,00 |
| | | | |
| gamma-Glycidoxy-propyltrimethoxysilan | 0,40 | 0,40 | 0,40 |
| | | | |
| Gesamt Bindemittelkomponente **A** | 100,00 | 100,00 | 100,00 |

Die Herstellung der Bindemittelkomponenten **A** erfolgt, indem zunächst die gemäß Tabelle 1 bis 3 unter "Vorlage" aufgeführten Komponenten gemäß obiger Reihenfolge vermischt werde. Anschließend erfolgt eine Dispergierung bis zu einer Temperatur von 55 °C. Nach dem Erreichen dieser Temperatur, werden alle weiteren Komponenten unter Rühren hinzugegeben. Nach vollständiger Zugabe wird für weitere 15 Minuten gerührt. Nach einer Reifezeit von mindestens 12 Stunden sind die Bindemittelkomponenten zur Verwendung bereit.

### Herstellung erfindungsgemäß zu verwendender Ausführungsformen H1 bis H3 der Härterkomponente B:

**Tabelle 4: Zusammensetzung der Härterkomponente B: H1 bis H3**

| Härterkomponente **B** | | | |
|---|---|---|---|
| | **H1** | **H2** | **H3** |
| Methylendi(phenylisocyanat) Isomerengemisch **B1.2** und **B2** | 70,62 | 62,62 | 81,62 |
| Poly(oxyalkylenglykol) aus Ethylenoxid/Propylenoxid **B1.1** | 28,4 | 36,4 | 18,4 |
| gamma-Glycidoxy-propyltrimethoxysilan | 0,5 | 1,0 | 0,8 |
| Pigmentpaste schwarz | 0,4 | | 0,4 |
| Pigmentpaste gelb | | 0,6 | |
| Silikonhaltiger Entschäumer | 0,08 | 0,1 | 0,08 |
| Gesamt Härterkomponente **B** | 100,00 | 100,00 | 100,00 |

Zur Herstellung der Härterkomponenten **B** wird das Methylendi(phenylisocyanat) Isomerengemisch vorlegt und die übrigen Komponenten werden in der angegebenen Reihenfolge unter Rühren zugegeben. Die anschließende Reaktionszeit beträgt 1 bis 12 Stunden.

### Herstellung von erfindungsgemäß zu verwendenden Beschichtungszusammensetzungen C1 bis C5

Die Beschichtungsmittelzusammensetzung wird durch Vermischen von 100 Gew.-Teilen der Bindemittelkomponente **A** mit 40 Gew.-Teilen der Härterkomponente **B** hergestellt. Es wurden folgende Beschichtungsmittelzusammensetzungen hergestellt: **BM1** mit **H1** (**C1**), **BM1** mit **H3** (**C2**), **BM2** mit **H1** (**C3**), **BM6** mit **H1** (**C4**) und **BM7** mit **H2** (**C5**).

### Herstellung von Beschichtungen und Untersuchung dieser Beschichtungen

Es wurden im Laborversuch Beschichtungen auf Prüfblechen hergestellt und anschließend untersucht. Diese Laborversuche dienen als gute und hinreichende Modellierung der Innenbeschichtung von Behältern, deren Verschmutzung mit Produktresten sowie deren Reinigung.

Zur Herstellung der Beschichtungen **SC1** bis **SC5** wurden die zuvor beschriebenen Beschichtungsmittelzusammensetzungen **C1** bis **C5** auf Aluminiumprüfbleche der Legierung 2024, unplattiert, mittels einer Zwei-Komponenten-Hochdruckspritzanlage, deren Vorratsbehälter und Schlauchsystem temperierbar sind, beidseitig beschichtet. Die Trockenschichtdicke lag im Bereich von 250 bis 450 µm. Diese wurde 30 Minuten nach der Applikation bestimmt. Anschließend wurde die Beschichtung für 2 Stunden bei 20°C getrocknet.

Die so hergestellten Beschichtungen wurden mit unterschiedlichen Holzleimen zur Verklebung von Spanplatten basierend auf wässrigen Lösungen von Aminoplastharzen überschichtet und für einige Stunden stehen gelassen. Es resultierte jeweils ein mit teils verfestigtem, teils hochviskosem Produkt verschmutztes beschichtetes Prüfblech.

Anschließend wurde die auf dem Blech angeordnete und mit Produktresten verschmutze Beschichtung mit einer Klinge angeschnitten und zum Erhalt von händisch greifbaren Abschnitten der Beschichtung teilweise abgehebelt. Dann wurde die Beschichtung von der Metalloberfläche abgezogen. Dieses Abziehen gelang rückstandsfrei und ohne großen Kraftaufwand. Das vollständig freigelegte metallische Substrat zeigte zudem keinerlei Verschmutzungen durch das Produkt, gleichbedeutend mit einer guten chemischen Beständigkeit der Beschichtung vor der Einwirkung des aufgetragenen Produkts.

## Patentansprüche

1. Verwendung einer Beschichtungsmittelzusammensetzung enthaltend mindestens eine Bindemittelkomponente A und mindestens eine Härterkomponente B, wobei
die Bindemittelkomponente A
A1 mindestens eine Polyolkomponente enthaltend mindestens ein Poly(oxyalkylen)glykol,
A2 mindestens ein aromatisches Diamin,
A3 Silikonelastomerpartikel und
A4 mindestens einen Polyurethanharnstoff,
enthält
und die Härterkomponente B
B1 mindestens eine urethangruppenhaltige Komponente enthaltend unblockierte Isocyanatgruppen und
B2 mindestens ein aromatisches Diisocyanat aus Methylendi(phenylisocyanat),
enthält,
wobei die Härterkomponente B einen Gehalt an unblockierten Isocyanatgruppen von 10 bis 30 Gew.-% aufweist
und wobei
der Festkörper der Beschichtungsmittelzusammensetzung größer als 95 Gew.-% ist,
zur Innenbeschichtung von Behältern.

2. Verwendung nach Anspruch 1, **dadurch gekennzeichnet, dass** die Beschichtungsmittelzusammensetzung
die Komponente A1 in einer Menge von 8 bis 76 Gew.-%,
die Komponente A2 in einer Menge von 1 bis 8 Gew.-%,
die Komponente A3 in einer Menge von 0,2 bis 9 Gew.-%,
die Komponente A4 in einer Menge von 0,5 bis 11 Gew.-%, und
die Härterkomponente B in einer Menge von 20 bis 40 Gew.-%,
jeweils bezogen auf das Gesamtgewicht der Beschichtungsmittelzusammensetzung, enthält.

3. Verwendung nach einem der Ansprüche 1 oder 2, **dadurch gekennzeichnet, dass** die Polyolkomponente A1 mindestens ein Poly(oxyalkylen)glykol aus Ethylen- und/oder Propylenoxid enthält.

4. Verwendung nach Anspruch 3, wobei die Polyolkomponente A1 mindestens ein propoxyliertes Polyethylenglykol A1.1, mindestens ein Polypropylenglykol A1.2 sowie mindestens ein propoxyliertes Trimethylolpropan A1.3 enthält.

5. Verwendung nach einem der Ansprüche 1 bis 4, **dadurch gekennzeichnet, dass** die urethangruppenhaltige Komponente B1 hergestellt wird durch Reaktion einer hydroxylgruppenhaltigen Komponente B1.1 mit eine Isocyanatkomponente B1.2, wobei es sich bei der hydroxylgruppenhaltigen Komponente B1.1 um mindestens ein C₁-C₆-alkoxyliertes Poly(oxyalkylen)glykol handelt, die Isocyanatkomponente B1.2 ein aromatisches Diisocyanat aus Methylendi(phenylisocyanat) ist und das Verhältnis der OH-Gruppen der Komponente B1.1 zu den NCO-Gruppen der Isocyanatkomponente B1.2 in einem Bereich von 1:1,05 bis 1:2,05 liegt.

6. Verwendung nach einem der Ansprüche 1 bis 5, wobei der Anteil der Komponente B2, bezogen auf die Härterkomponente B, von 40 bis 60 Gew.-% beträgt.

7. Verwendung nach einem der Ansprüche 1 bis 6, **dadurch gekennzeichnet, dass** das aromatische Diamin A2 ein einkerniger Aromat ist, wobei dieses aromatische Diamin A2 bevorzugt alkyliert ist und besonders bevorzugt die Amingruppen direkt an den Aromaten gebunden sind.

8. Verfahren zur Beschichtung der Innenfläche eines Behälters, bei dem eine Beschichtungsmittelzusammensetzung auf die Innenfläche des Behälters aufgebracht wird und anschließend gehärtet wird, **dadurch gekennzeichnet, dass** die Beschichtungsmittelzusammensetzung mindestens eine Bindemittelkomponente A und mindestens eine Härterkomponente B enthält, wobei
die Bindemittelkomponente A
A1 mindestens eine Polyolkomponente enthaltend mindestens ein Poly(oxyalkylen)glykol,
A2 mindestens ein aromatisches Diamin,
A3 Silikonelastomerpartikel und
A4 mindestens einen Polyurethanharnstoff,
enthält
und die Härterkomponente B
B1 mindestens eine urethangruppenhaltige Komponente enthaltend unblockierte Isocyanatgruppen und
B2 mindestens ein aromatisches Diisocyanat aus Methylendi(phenylisocyanat),
enthält,
wobei die Härterkomponente B einen Gehalt an unblockierten Isocyanatgruppen von 10 bis 30 Gew.-% aufweist
und wobei
der Festkörper der Beschichtungsmittelzusammensetzung größer als 95 Gew.-% ist.

9. Verfahren nach Anspruch 8, **dadurch gekennzeichnet, dass** die Beschichtungsmittelzusammensetzung durch Spritzapplikation in einer Nassschichtdicke von 100 bis 600 µm, bevorzugt 150 bis 350 µm aufgebracht wird und die anschließende Härtung durch chemische Vernetzung in einem Temperaturbereich von 15 bis 60 °C, bevorzugt 15 bis 25 °C durchgeführt wird.

10. Verfahren nach Anspruch 8 oder 9, **dadurch gekennzeichnet, dass** die Innenfläche des Behälters ein metallisches Substrat ist.

11. Verfahren nach einem der Ansprüche 8 bis 10, **dadurch gekennzeichnet, dass** der Behälter ein Tank, Tankwagen oder Kesselwagen ist.

12. Behälter, der auf der Innenfläche mit einer Beschichtung, die gemäß dem Verfahren nach einem der Ansprüche 8 bis 11 hergestellt wurde, beschichtet ist.

13. Verfahren zur Reinigung eines Behälters, welches die folgenden Schritte umfasst:
(A) Bereitstellen eines mit Produktresten mindestens eines Produktes verschmutzten Behälters, welcher eine gemäß einem der Ansprüche 8 bis 11 hergestellte Innenbeschichtung aufweist, welche vor dem Befüllen des Behälters mit einem Produkt hergestellt wurde, wobei der Behälter zur Lagerung und/oder dem Transport von mindestens einem Produkt verwendet wurde,
und
(B) Rückstandsfreie Entfernung der Innenbeschichtung sowie den auf der Innenbeschichtung angeordneten Produktresten.

14. Verfahren nach Anspruch 13, **dadurch gekennzeichnet, dass** die rückstandfreie Entfernung der Innenbeschichtung und der darauf angeordneten Produktreste durch Anschneiden der Beschichtung und dann folgendes mechanisches Abziehen der Beschichtung erfolgt.

15. Verfahren nach Anspruch 13 oder 14, **dadurch gekennzeichnet, dass** es sich bei dem mindestens einen Produkt um ein flüssiges Industrieprodukt ausgewählt aus der Gruppe bestehend aus Farben, Lacken, Schmierstoffen, Klebstoffen, Leimen oder Ölen wie Rohöl, Mineralölen oder Silkonölen handelt.

## Claims

1. The use of a coating agent composition comprising at least one binder component A and at least one curing component B,
the binder component A comprising
A1 at least one polyol component comprising at least one poly(oxyalkylene) glycol,
A2 at least one aromatic diamine,
A3 silicone elastomer particles, and
A4 at least one polyurethane urea,
and the curing component B comprising
B1 at least one urethane group-containing component comprising nonblocked isocyanate groups and
B2 at least one aromatic diisocyanate from methylenedi(phenyl isocyanate), the curing component B having an amount of nonblocked isocyanate groups of 10 to 30 wt%,
and
the solids content of the coating agent composition being greater than 95 wt%,
for lining containers.

2. The use according to claim 1, wherein the coating agent composition comprises
component A1 in an amount of 8 to 76 wt%,
component A2 in an amount of 1 to 8 wt%,
component A3 in an amount of 0.2 to 9 wt%,
component A4 in an amount of 0.5 to 11 wt%, and
the curing component B in an amount of 20 to 40 wt%,
based in each case on the total weight of the coating agent composition.

3. The use according to claim 1 or 2, wherein the polyol component A1 comprises at least one poly(oxyalkylene) glycol from ethylene oxide and/or propylene oxide.

4. The use according to claim 3, the polyol component A1 comprising at least one propoxylated polyethylene glycol A1.1, at least one polypropylene glycol A1.2, and at least one propoxylated trimethylolpropane A1.3.

5. The use according to any one of claims 1 to 4, wherein the urethane group-containing component B1 is prepared by reaction of a hydroxyl group-containing component B1.1 with an isocyanate component B1.2, the hydroxyl group-containing component B1.1 being at least one C₁-C₆-alkoxylated poly(oxyalkylene) glycol, the isocyanate component B1.2 being an aromatic diisocyanate from methylenedi(phenyl isocyanate), and the ratio of the OH groups of component B1.1 to the NCO groups of isocyanate component B1.2 being in a range from 1:1.05 to 1:2.05.

6. The use according to any one of claims 1 to 5, the fraction of component B2, based on the curing component B, being from 40 to 60 wt%.

7. The use according to any one of claims 1 to 6, wherein the aromatic diamine A2 is a monocyclic aromatic, this aromatic diamine A2 preferably being alkylated, and more preferably the amine groups being bonded directly to the aromatic moiety.

8. A method for lining a container, in which a coating agent composition is applied to the internal surface of the container and is subsequently cured, wherein the coating agent composition comprises at least one binder component A and at least one curing component B,
the binder component A comprising
A1 at least one polyol component comprising at least one poly(oxyalkylene) glycol,
A2 at least one aromatic diamine,
A3 silicone elastomer particles, and
A4 at least one polyurethane urea,
and the curing component B comprising
B1 at least one urethane group-containing component comprising nonblocked isocyanate groups and
B2 at least one aromatic diisocyanate from methylenedi(phenyl isocyanate),
the curing component B having an amount of nonblocked isocyanate groups of 10 to 30 wt%,
and
the solids content of the coating agent composition being greater than 95 wt%.

9. The method according to claim 8, wherein the coating agent composition is applied by spray application in a wet film thickness of 100 to 600 µm, preferably 150 to 350 µm, and the subsequent curing is carried out by chemical crosslinking in a temperature range from 15 to 60°C, preferably 15 to 25°C.

10. The method according to claim 8 or 9, wherein the internal surface of the container is a metallic substrate.

11. The method according to any one of claims 8 to 10, wherein the container is a tank, tanker, or tank car.

12. A container lined with a coating produced by the method according to any one of claims 8 to 11.

13. A method for cleaning a container, comprising the following steps:
(A) providing a container soiled with product residues of at least one product and having a lining produced according to any one of claims 8 to 11, said lining having been produced prior to the filling of the container with a product, the container having been used for the storage and/or transport of at least one product,
and
(B) residuelessly removing the lining and also the product residues located on the lining.

14. The method according to claim 13, wherein the residueless removal of the lining and of the product residues located thereon is accomplished by cutting into the lining and then subsequently mechanically peeling off the lining.

15. The method according to claim 13 or 14, wherein the at least one product is a liquid industrial product selected from the group consisting of paints, varnishes, lubricants, adhesives, glues, or oils such as crude oil, mineral oils, or silicone oils.

## Revendications

1. Utilisation d'une composition d'agent de revêtement contenant au moins un composant liant A et au moins un composant durcisseur B, dans laquelle
le composant liant A contient
A1 au moins un composant à base de polyol contenant au moins un poly(oxyalkylène)glycol,
A2 au moins une diamine aromatique,
A3 des particules d'élastomère de silicone et
A4 au moins une urée de polyuréthane,
et le composant durcisseur B contient
B1 au moins un composant contenant des groupes uréthane contenant des groupes isocyanate non bloqués, et
B2 au moins un diisocyanate aromatique composé de méthylènedi(phénylisocyanate),
dans laquelle le composant durcisseur B présente une teneur en groupes isocyanate non bloqués de 10 à 30 % en poids,
et dans laquelle
le corps solide de la composition d'agent de revêtement est supérieur à 95 % en poids,
aux fins du revêtement intérieur de contenants.

2. Utilisation selon la revendication 1, **caractérisée en ce que** la composition d'agent de revêtement contient, respectivement par rapport au poids total de la composition d'agent de revêtement,
le composant A1 en une quantité de 8 à 76 % en poids,
le composant A2 en une quantité de 1 à 8 % en poids,
le composant A3 en une quantité de 0,2 à 9 % en poids,
le composant A4 en une quantité de 0,5 à 11 % en poids, et
le composant durcisseur B en une quantité de 20 à 40 % en poids.

3. Utilisation selon l'une quelconque des revendications 1 ou 2, **caractérisée en ce que** le composant à base de polyol A1 contient au moins un poly(oxyalkylène)glycol composé d'oxyde d'éthylène et/ou de propylène.

4. Utilisation selon la revendication 3, dans laquelle le composant à base de polyol A1 contient au moins un polyéthylèneglycol propoxylé A1.1, au moins un polypropylèneglycol A1.2 ainsi qu'au moins un triméthylolpropane propoxylé A1.3.

5. Utilisation selon l'une quelconque des revendications 1 à 4, **caractérisée en ce que** le composant B1 contenant des groupes uréthane est fabriqué par réaction d'un composant contenant des groupes hydroxyle B1.1 avec un composant à base d'isocyanate B1.2, dans laquelle le composant contenant des groupes hydroxyle B1.1 est au moins un poly(oxyalkylène)glycol alcoxylé en C₁-C₆, le composant à base d'isocyanate B1.2 est un diisocyanate aromatique composé de méthylènedi(phénylisocyanate) et le rapport entre les groupes OH du composant B1.1 et les groupes NCO du composant à base d'isocyanate B1.2 se situe dans une plage de 1:1,05 à 1:2,05.

6. Utilisation selon l'une quelconque des revendications 1 à 5, dans laquelle la fraction du composant B2, par rapport au composant durcisseur B, va de 40 à 60 % en poids.

7. Utilisation selon l'une quelconque des revendications 1 à 6, **caractérisée en ce que** la diamine aromatique A2 est un aromate à un noyau, dans laquelle ladite diamine aromatique A2 est de manière préférée alkylée et de manière particulièrement préférée les groupes amine sont liés directement aux aromates.

8. Procédé pour revêtir la face intérieure d'un contenant, où une composition d'agent de revêtement est appliquée sur la face intérieure du contenant puis est durcie, **caractérisé en ce que** la composition d'agent de revêtement contient au moins un composant liant A et au moins un composant durcisseur B, dans lequel
le composant liant A contient
A1 au moins un composant à base de polyol contenant au moins un poly(oxyalkylène)glycol,
A2 au moins une diamine aromatique,
A3 des particules d'élastomère de silicone et
A4 au moins une urée de polyuréthane,
et le composant durcisseur B contient
B1 au moins un composant contenant des groupes uréthane contenant des groupes isocyanate non bloqués, et
B2 au moins un diisocyanate aromatique composé de méthylènedi(phénylisocyanate),
dans lequel le composant durcisseur B présente une teneur en groupes isocyanate non bloqués de 10 à 30 % en poids,
et dans lequel
le corps solide de la composition d'agent de revêtement est supérieur à 95 % en poids.

9. Procédé selon la revendication 8, **caractérisé en ce que** la composition d'agent de revêtement est appliquée par application par pulvérisation en une épaisseur de couche humide de 100 à 600 µm, de manière préférée de 150 à 350 µm et le durcissement consécutif est effectué par réticulation chimique dans une plage de températures de 15 à 60 °C, de manière préférée de 15 à 25 °C.

10. Procédé selon la revendication 8 ou 9, **caractérisé en ce que** la face intérieure du contenant est un substrat métallique.

11. Procédé selon l'une quelconque des revendications 8 à 10, **caractérisé en ce que** le contenant est un réservoir, un camion-citerne ou un wagon-citerne.

12. Contenant, qui est revêtu sur la face intérieure d'un revêtement, qui a été fabriqué selon le procédé selon l'une quelconque des revendications 8 à 11.

13. Procédé pour nettoyer un contenant, lequel comprend les étapes suivantes :
(A) mise à disposition d'un contenant souillé par des restes de produit, d'au moins un produit, lequel présente un revêtement intérieur fabriqué selon l'une quelconque des revendications 8 à 11, lequel a été fabriqué avant le remplissage du contenant avec un produit, dans lequel le contenant a été utilisé pour le stockage et/ou le transport d'au moins un produit,
et
(B) enlèvement sans résidu du revêtement intérieur ainsi que des restes de produit disposés sur le revêtement intérieur.

14. Procédé selon la revendication 13, **caractérisé en ce que** l'enlèvement sans résidu du revêtement intérieur et des restes de produit disposés dessus a lieu par découpage du revêtement puis par retrait mécanique qui suit du revêtement.

15. Procédé selon la revendication 13 ou 14, **caractérisé en ce que** l'au moins un produit est un produit industriel liquide choisi parmi le groupe constitué d'encres, de vernis, de lubrifiants, de matières adhésives, de colles ou d'huiles telles qu'huiles brutes, huiles minérales ou huiles de silicone.
